# FASCICULE DE BREVET EUROPEEN

(11) **EP 1 018 756 B1**
(45) Date de publication et mention de la délivrance du brevet: **26.03.2003**
(21) Numéro de dépôt: 99403046.8
(22) Date de dépôt: 07.12.1999
(51) Int. Cl.: H01H 33/02, H02B 13/025

(54) **Dispositif de coupure électrique pour moyenne et haute tension**
Mittle oder Hochspannungsschaltvorrichtung
Middle or high voltage switching device

(30) Priorité: 07.12.1998 FR 9815435
(43) Date de publication de la demande: 12.07.2000
(73) Titulaire: SOULE MATERIEL ELECTRIQUE, 65200 Bagnères-de-Bigorre (FR)
(72) Inventeur: Ricaud, Jean-François, 65360 Allier (FR); Teissier, Bernard, 65200 Bagneres de Bigorre (FR)
(74) Mandataire: Texier, Christian

(56) Documents cités:
- EP-A- 0 417 015
- DE-U- 29 508 637
- FR-A- 2 735 898
- FR-A- 2 747 500
- GB-A- 2 252 671
- US-A- 5 146 387

## Description

La présente invention concerne les dispositifs de coupure électrique pour extérieur, notamment pour ensemble installé en haut de poteaux, pour la coupure de moyenne et/ou haute tension.

On a déjà proposé de nombreux dispositifs de coupure électrique à cette fin.

Cependant, à la connaissance de la Demanderesse, les dispositifs de coupure électrique connus ne donnent pas totalement satisfaction.

La présente invention a par conséquent pour but de perfectionner les dispositifs de coupure électrique pour moyenne/haute tension.

Selon la présente invention, le but précité est atteint grâce à un dispositif comprenant un boîtier qui loge des moyens de coupure électrique, et qui est équipé, sur sa paroi supérieure, d'une soupape apte à s'ouvrir automatiquement lorsque la pression à l'intérieur du boîtier dépasse un seuil déterminé, caractérisé par un transformateur de tension intercalé entre les moyens de coupure électrique et la soupape, de sorte que le transformateur forme un écran interdisant tout risque de projection de pièce provenant des moyens de coupure électrique, vers l'extérieur du boîtier, à travers la soupape.

D'autres caractéristiques avantageuses de la présente invention apparaissent dans les revendications dépendantes.

D'autres caractéristiques, buts et avantages de la présente invention, apparaîtront à la lecture de la description détaillée qui va suivre, et en regard des dessins annexés, donnés à titre d'exemple non limitatif, et sur lesquels :
- la figure 1 représente une vue générale d'un dispositif de coupure électrique conforme à la présente invention installé en haut d'un poteau,
- la figure 2 représente une vue schématique en coupe horizontal d'un boîtier de dispositif de coupure électrique conforme à la présente invention,
- la figure 3 représente une vue de moyens de traversée de parois de boîtier conforme à la présente invention, selon une demi vue supérieure en coupe axiale,
- la figure 4 représente une vue similaire partielle en coupe axiale des moyens de traversée au niveau du corps électriquement isolant,
- la figure 5 représente une vue en coupe verticale du boîtier de coupure électrique conforme à la présente invention,
- la figure 6 représente une vue latérale extérieure du même boîtier,
- les figures 7, 8 et 9 représentent respectivement deux vues latérales orthogonales entre elles et une vue de dessus d'une console support conforme à la présente invention, et
- la figure 10 représente une vue en coupe verticale, selon une orientation orthogonale à celle de la figure 5, du boîtier de coupure électrique conforme à la présente invention.

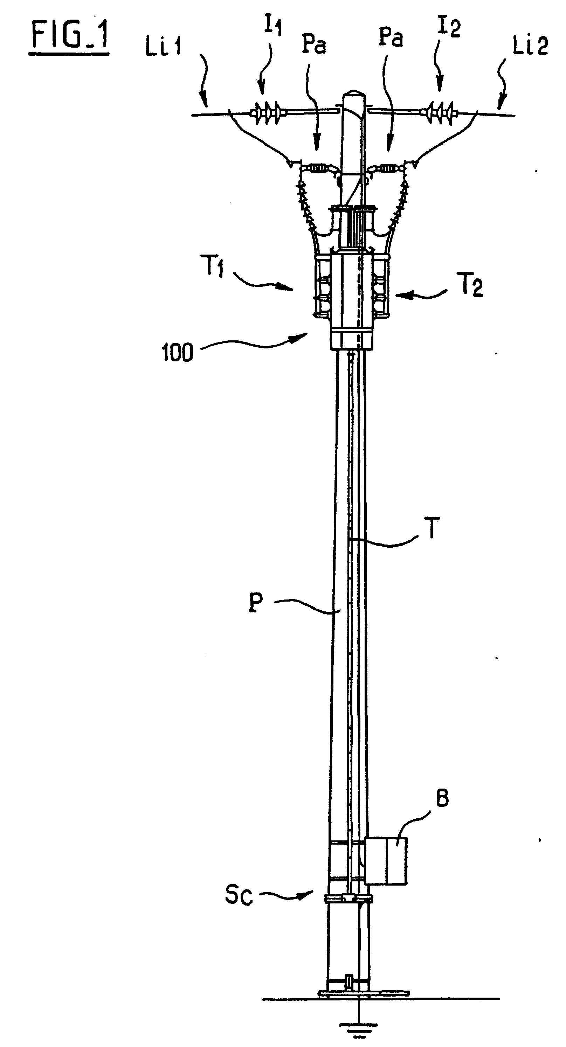

On aperçoit sur la figure 1 annexée, un dispositif de coupure électrique conforme à la présente invention placé dans un boîtier 100 fixé en haut d'un poteau P.

Le dispositif de coupure électrique 700 proprement dit peut faire l'objet de nombreuses variantes de réalisation et ne sera donc pas décrit dans le détail par la suite.

On pourra trouver des exemples de réalisation de tels moyens de coupure électrique 700 dans les documents FR-A-2693834, FR-A-2683673, FR-A-2685540, FR-A-2762710 et FR-A-2675944, ainsi que dans le document DE-U-29508637 sur lequel est basé le préambule de la revendication 1.

Ces moyens de coupure électrique 700 placés dans le boîtier 100 sont de préférence commandés mécaniquement à l'aide d'une tringle rigide T qui chemine le long du poteau P à partir de la base du boîtier 100 et qui aboutit en bas du poteau à un système de commande manuel ou mécanisé schématisé sous la référence Sc.

Plus précisément encore, les moyens de coupure électrique 700 sont placés entre deux tronçons Li1 et Li2 d'une ligne électrique moyenne ou haute tension, à titre d'exemple non limitatif à 20 000 Volts.

Ces deux tronçons Li1 et Li2 de lignes à séparer sur commande sont reliés mécaniquement au haut du poteau P par tous moyens appropriés, par exemple à l'aide d'isolateurs I1, I2.

Les conducteurs de phase d'un premier tronçon Li1 sont raccordés à des moyens T1 respectifs traversant une premier face verticale du boîtier 100. Les conducteurs de phase du second tronçon Li2 sont raccordés de manière symétrique à des moyens T2 respectifs traversant une seconde face verticale du boîtier 100, opposée à la première précitée.

De préférence, le système est complété par des moyens aptes à limiter la surtension éventuelle au niveau des lignes de phase. De tels moyens limiteur de surtension peuvent être formés de parafoudre à base de varistances, intercalés par exemple entre les lignes de phase et le neutre ou la masse comme schématisé sous la référence Pa sur la figure 1.

Bien entendu, à l'intérieur du boîtier 100 les moyens de coupure électrique proprement dit 700 sont intercalés entre les moyens de traversée T1 et les moyens de traversée T2.

Ainsi selon le mode de réalisation préférentiel illustré sur les figures annexées, ces moyens de coupure 700 comprennent un ensemble susceptible de rotation par rapport à un axe vertical O-O et comprenant 3 paires de couteaux ou conducteurs 702 associés respectivement à chacune des phases, plus précisément à des pinces 402 prévues respectivement en extrémité de chacune des traversées T1, T2 correspondant aux diverses phases. Dans une position de fermeture du dispositif, chaque paire de couteaux 702 est respectivement reliée électriquement aux pinces 402 et donc aux tronçons Li1 et Li2 d'une phase donnée, via les moyens de traversée T1, T2. Au contraire en position d'ouverture du dispositif, les couteaux 702 sont pivotés dans une position telle qu'ils sont séparés desdits moyens de traversée T1, T2 et par conséquent des tronçons de lignes associés Li1 et Li2.

Pour piloter le système électronique de gestion de coupure associé, il est généralement nécessaire de disposer d'une alimentation basse tension, par exemple 240/300 Volts.

Il est classique pour cela d'abaisser la haute ou moyenne tension

(20 000 volts par exemple) à l'aide d'un transformateur abaisseur de tension situé à l'extérieur du boîtier 100, de préférence en haut du poteau P.

Cependant, il est préconisé dans le cadre de l'invention de placer un tel transformateur 200 à l'intérieur du boîtier 100.

Ainsi on obtient sans surcoût, à l'aide du boîtier 100 des moyens de coupure électrique, une protection efficace du transformateur 200 contre les intempéries.

Plus précisément, dans le cadre de la présente invention, le boîtier 100 est réalisé de préférence en tôle métallique pliée et soudée.

Plus précisément encore, de préférence, dans sa partie verticale le boîtier 100 comprend :
. deux parois verticales principales parallèles et opposées 110, 112, recevant chacune en position juxtaposée verticalement les trois moyens de traversée T1 et respectivement les trois moyens de traversée T2 associés aux deux tronçons de lignes Li1 et Li2,
. deux parois verticales secondaires 114, 116, parallèles entre elles et perpendiculaires aux parois principales précitées 110, 112 et
. quatre tronçons de parois verticales 120, 122, 124, 126 assurant respectivement la liaison entre les arêtes verticales adjacentes des parois principales 110, 112 et secondaires 114, 116 précitées.

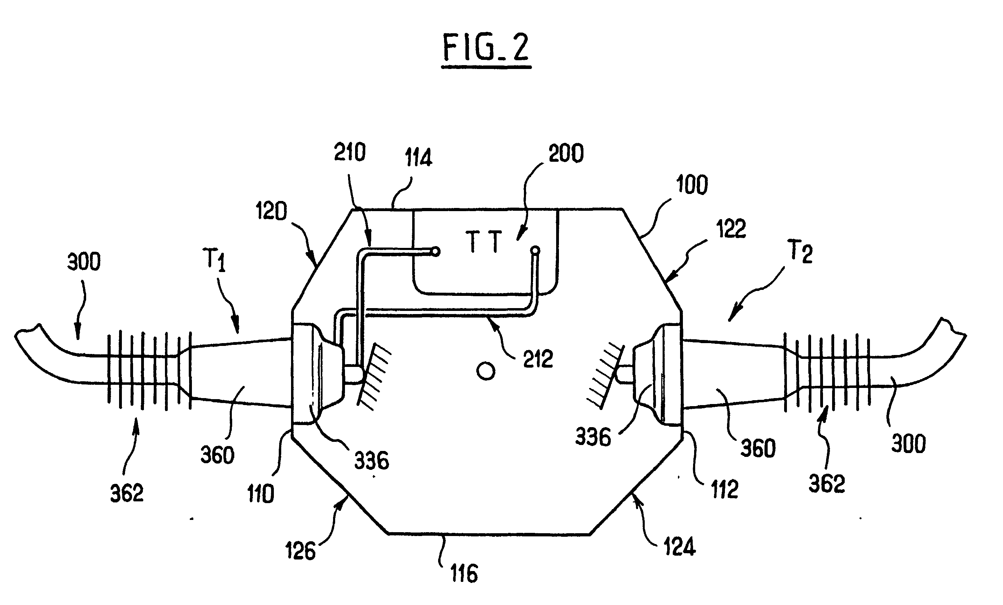

Ainsi, comme on l'aperçoit sur la figure 2, vue en coupe horizontale, le boîtier 100 possède une section en polygone de type octogone. Grâce à cette disposition (notamment suppression de tout angle droit classique sur les boîtiers connus), on obtient un boîtier présentant une résistance mécanique optimale.

Dans le cadre de l'invention, le boîtier 100 est formé d'une structure étanche et loge un gaz neutre ou auto-extincteur d'arc électrique, par exemple du SF6.

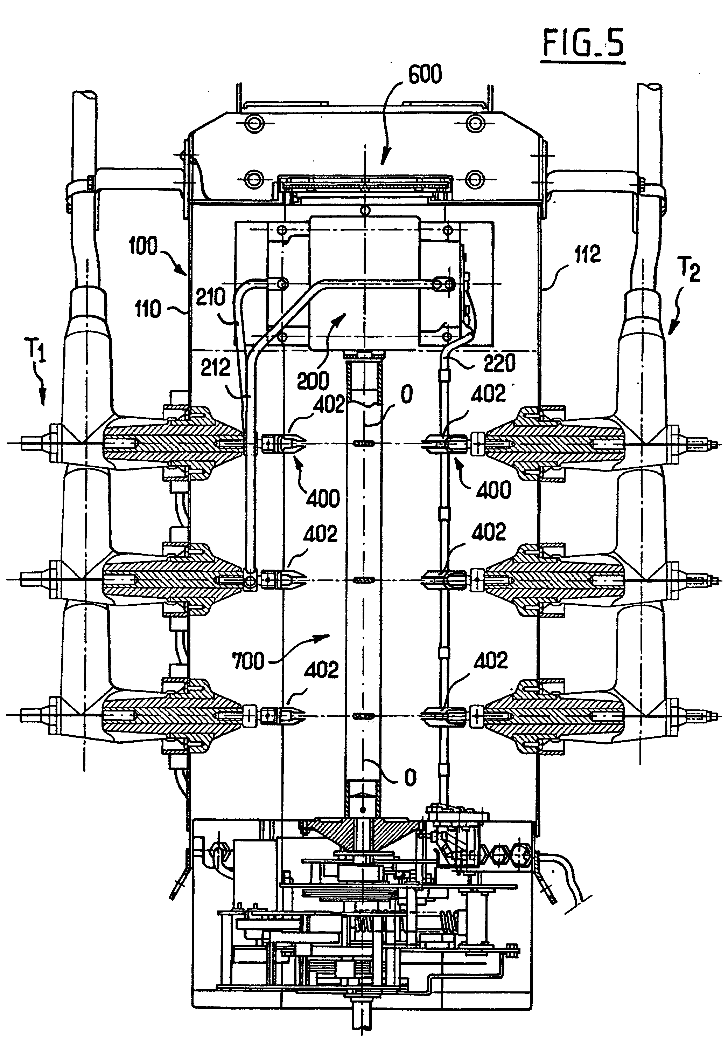

Sur la figure 5, on a illustré sous la référence 210, 212 les conducteurs d'entrée de gros calibres du transformateur 200 reliés aux tronçons de phase haute tension et sous la référence 220 les conducteurs de sortie de plus faible calibre, correspondant à la basse tension (240/300 Volts) et dirigés vers le système de gestion électronique de coupure, pour l'alimentation de celui-ci, logé par exemple dans un boîtier auxiliaire B en bas de poteau.

On notera par ailleurs que pour éviter tout amorçage entre les lignes de phase haute tension et le boîtier 100 malgré la présence du transformateur 200 à l'intérieur du boîtier métallique 100, il est primordial de faire cheminer les conducteurs de gros calibre 210, 212, à l'intérieur du boîtier, à une distance suffisante minimale de la paroi de boîtier 100 la plus proche. Dans le cadre de l'invention, cette distance minimale est de préférence fixée à 61mm.

Cependant cette distance peut être réduite en plaçant des gaines thermorétractables électriquement isolantes sur les conducteurs, au moins les conducteurs haute tension, associés au transformateur 200.

Ainsi, comme on le voit sur la figure 5, de préférence les deux conducteurs 200, 212 de gros calibre présentent essentiellement un tronçon horizontal servant au raccordement sur le transformateur 200 et un tronçon vertical assurant le raccordement sur l'extrémité interne au boîtier 100 d'une traversée respective T1.

Par ailleurs, comme on l'a indiqué précédemment, dans le cadre de la présente invention le boîtier 100 est équipé, sur sa paroi supérieure, d'une soupape 600 apte à s'ouvrir automatiquement lorsque la pression à l'intérieur du boîtier 100 dépasse un seuil déterminé.

Une augmentation de pression à l'intérieur du boîtier 100 peut être due notamment à une génération de gaz résultant d'un défaut de fonctionnement du dispositif et/ou à un échauffement intempestif.

La soupape 600 peut faire l'objet de nombreux modes de réalisation. Il peut s'agir par exemple d'un caisson confinant une membrane circulaire en acier inoxydable, par exemple d'une épaisseur de l'ordre de 2/10^{ème}, reposant contre un joint torique d'étanchéité. En fonctionnement normal, l'étanchéité du boîtier est assurée par le joint torique. En cas de surpression, la membrane peut être écartée du joint, voire même être éjectée, pour permettre une évacuation des gaz.

En outre dans le cadre de la présente invention, le transformateur de tension 200 est intercalé entre les moyens de coupure électrique 700 et la soupape 600, comme on le voit sur les figures annexées.

Ainsi le transformateur 200 forme un écran interdisant tout risque de projection de pièce provenant des moyens de coupure électrique, vers l'extérieur du boîtier, à travers la soupape 600.

De ce fait selon la présente invention, malgré la présence de la soupape 600 susceptible de constituer une zone mécaniquement faible sur la paroi supérieure du boîtier, l'on garantit la protection des biens et des personnes en évitant tout risque de projection à l'extérieur du boîtier. Il convient à cet égard de noter que dans certaines circonstances, des défauts de fonctionnement des moyens de coupure peuvent conduire à des projections de pièces en fusion à haute température.

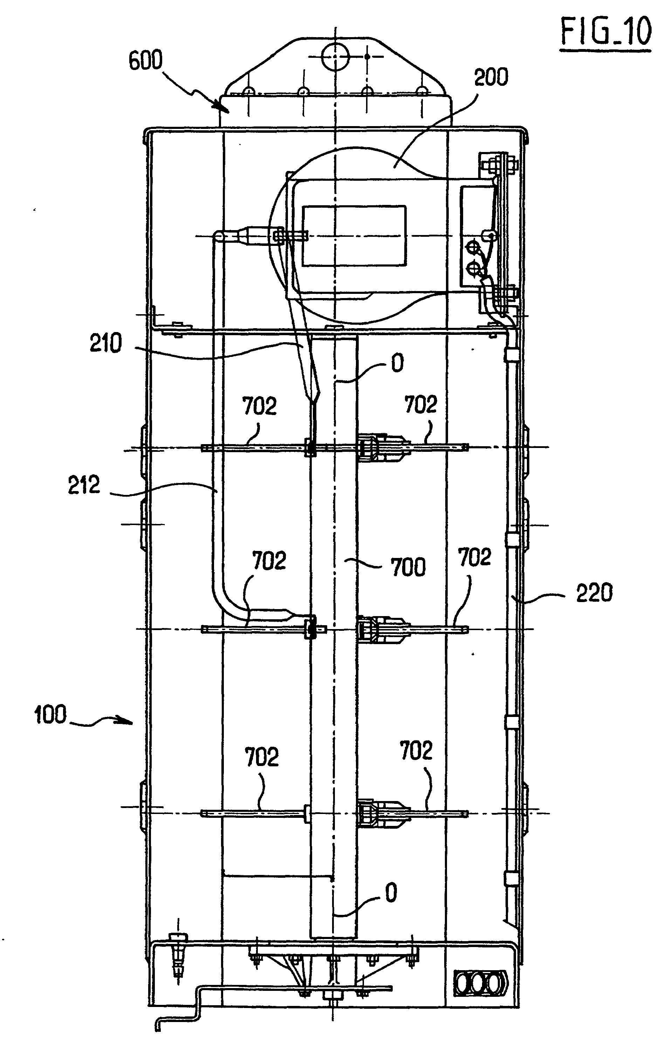

De plus comme indiqué précédemment, et comme cela est illustré sur la variante de réalisation de la figure 10, le transformateur 200 est de préférence placé dans une position sensiblement centrale du boîtier 100, considéré dans sa section horizontale, au dessus des moyens de coupure 700.

Grâce à cette disposition l'on peut optimiser la tenue diélectrique de l'ensemble.

On va maintenant décrire la structure des moyens de traversée T1, T2, conforme à la présente invention. Ces moyens sont de préférence identiques d'une part, entre les traversées d'entrée T1 et les traversées de sortie T2 et entre les phases d'autre part.

Pour l'essentiel, chacune de ces traversées T1, T2 comprend un conducteur électrique central 300, un corps rigide en matériau électriquement isolant 330 et une gaine externe à ailettes en matériau silicone 360.

Le conducteur électrique central 300 est réalisé en tout métal approprié connu de l'homme de l'art (aluminium par exemple). Il présente de préférence une section constante. Le cas échéant , ce conducteur électrique central 300 peut être incurvé sur une partie de sa longueur, de préférence externe au boîtier 100, pour assurer le raccordement sur les tronçons de lignes Li1 et Li2 de manière optimale.

Cependant, de préférence le tronçon de conducteur électrique central 300 situé sur l'extérieur du boîtier 100 et adjacent respectivement à l'une des parois 110, 112, est rectiligne et coaxial du tronçon de conducteur électrique central 300 situé à l'intérieur du boîtier 100.

Le raccordement électrique sur les extrémités du conducteur électrique central 300, respectivement à l'intérieur du boîtier 100 (pour coopérer avec les moyens de coupure mécanique) et à l'extérieur du boîtier 100 (pour assurer le raccordement vers les tronçons de lignes Li1 et Li2) pourra faire l'objet de nombreuses variantes de réalisation.

On notera que selon le mode de réalisation non limitatif illustré sur les figures annexées, de préférence l'extrémité du conducteur 300 située à l'intérieur du boîtier 100 possède un alésage borgne taraudé 302 pour le raccordement de pince 400 ou moyens équivalents appartenant au système de coupure électrique. Par ailleurs, l'extrémité du conducteur 300 située à l'extérieur du boîtier 100 peut être aplatie sous forme d'une lame 304 possédant des perçages 306 pour assurer le raccordement électrique.

Le cas échéant, le conducteur 300 peut, sur une partie de sa longueur située à l'intérieur du corps rigide électriquement isolant 330, posséder une zone munie d'un moletage 310 afin d'assurer une liaison mécanique satisfaisante entre le conducteur 300 et le corps rigide 330 qui l'entoure.

A titre d'exemple non limitatif, il peut s'agir d'un moletage droit au pas de 1mm.

Dans le cadre de la présente invention, le corps électriquement isolant 330 est réalisé en résine synthétique rigide. Il s'agit de préférence d'une résine époxy.

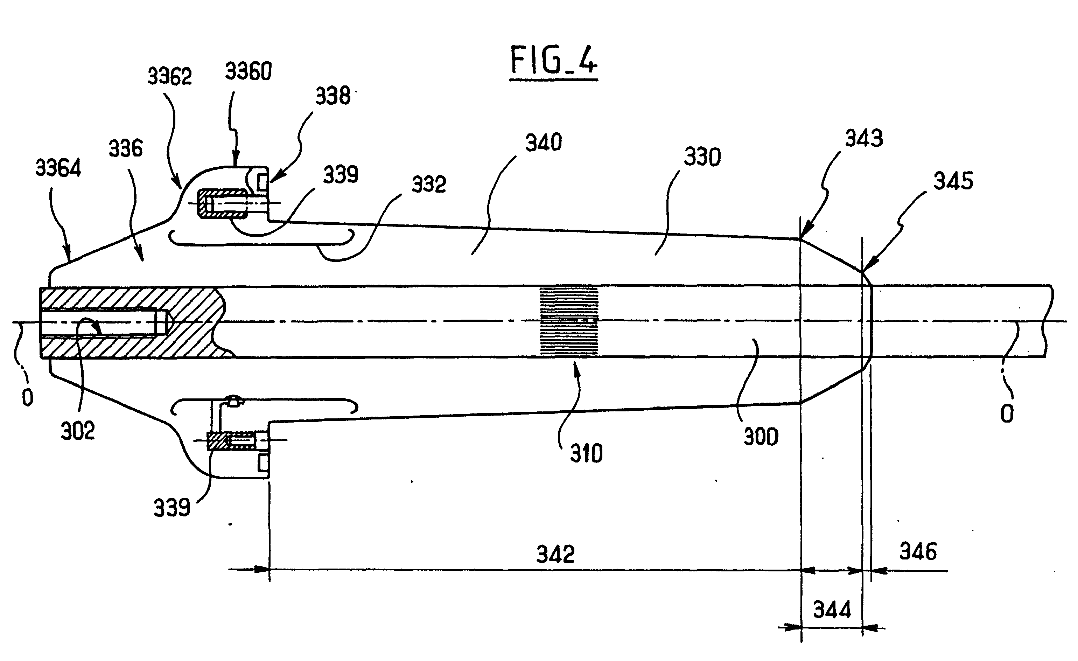

Comme on le voit sur la figure 4, ce corps 330 en résine époxy peut être surmoulé sur au moins une armature 332 apte à former une capacité en coopération avec le conducteur 300 pour permettre une mesure de tension sur chaque ligne de phase.

Ce système de mesure de tension capacitif ne sera pas décrit plus en détail par la suite. Le cas échéant, l'homme de l'art pourra se référer au document FR-A-2698695.

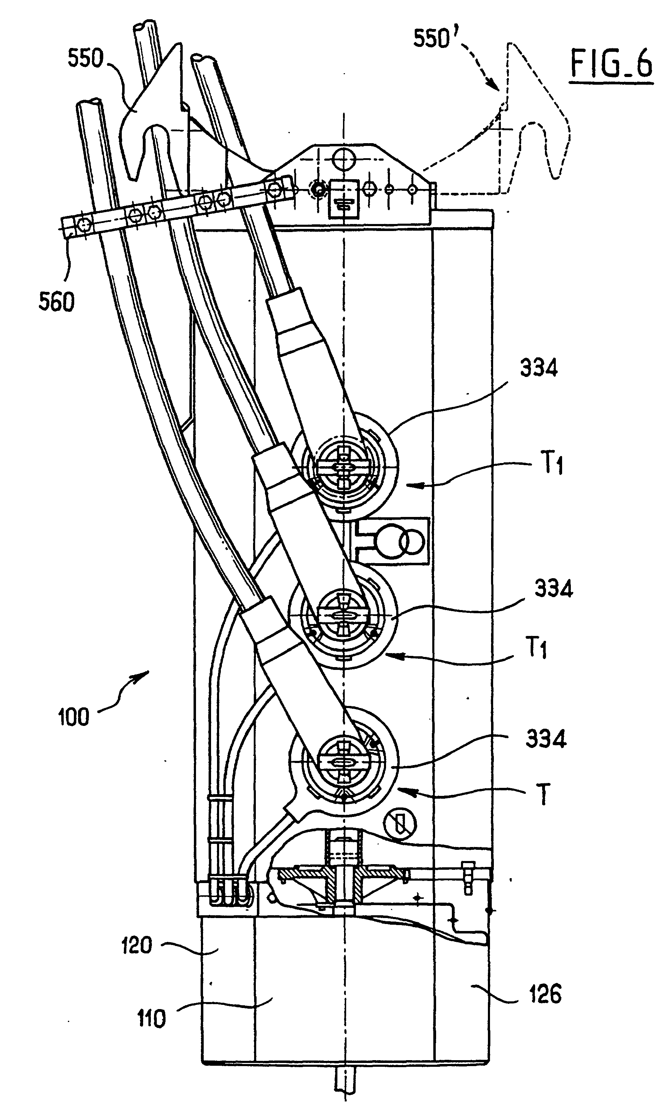

Ce dispositif de mesure de tension peut d'ailleurs être complété par un système de mesure de courant, à base de tores engagés sur l'extérieur de chaque traversée T1 et/ou T2 comme on l'a illustré sur la figure 6 sous la référence 334.

La géométrie du corps électriquement isolant rigide 330 en résine époxy peut faire l'objet de nombreuses variantes de réalisation.

De préférence, le corps en époxy 330 possède un élément 336 conçu pour être placé à l'intérieur du boîtier 100 et qui possède une face plane 338 en forme de couronne centrée sur l'axe O-O du conducteur 300 et perpendiculaire à cet axe O-O. Cette face plane 338 est destinée à venir reposer contre la face interne de l'une des parois 110, 112. De préférence, l'élément 336 possède des inserts 339, tels que des inserts filetés qui débouchent sur la face d'appui 338 pour assurer la fixation d'une traversée T1 ou T2 sur ladite paroi 110, 112 du boîtier 100 à l'aide de moyens de vissage complémentaires.

Ces inserts 339 peuvent également être utilisés pour assurer une prise de tension sur les armatures 332.

L'élément 336 possède de préférence une section convergente, c'est-à-dire qui se réduit, en éloignement de la phase d'appui 338 vers l'intérieur du boîtier 100.

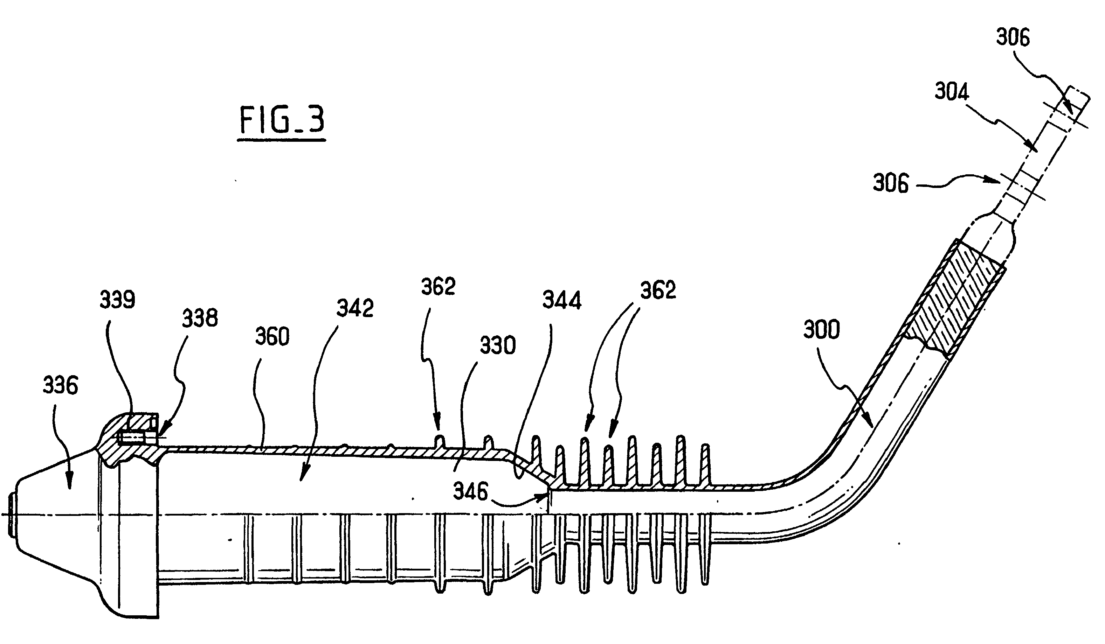

Plus précisément, l'élément 336 illustré sur les figures 3 et 4 possède un premier tronçon 3360 d'enveloppe cylindrique de révolution adjacent à la phase d'appui 338 et un tronçon 3364 tronconique effilé en direction de l'extrémité libre du corps 330, reliés entre eux par un tronçon intermédiaire 3362 en forme de calotte torique.

A titre d'exemple non limitatif, pour un conducteur central 300 en aluminium d'un diamètre de l'ordre de 25mm, la longueur axiale de l'élément 336 peut être de l'ordre de 77,5mm, et le diamètre interne de la surface d'appui 338 de l'ordre de 70mm, tandis que le diamètre externe de cette surface d'appui est de l'ordre de 100mm.

L'élément 340 du corps 330 situé à l'extérieur du boîtier 100 possède de préférence une enveloppe symétrique de révolution autour de l'axe O-O et effilé en éloignement de la surface 338.

Plus précisément encore, de préférence, comme on le voit sur la figure 4, cet élément 340 est formé de trois tronçons juxtaposés axialement :
- un premier tronçon 342 adjacent à la surface 338, par exemple d'une longueur de l'ordre de 181mm, et présentant un faible angle de convergence (par exemple un diamètre de 70mm à son extrémité adjacente à la surface 338 et un diamètre de l'ordre de 58mm à son extrémité opposée).
- un deuxième tronçon 344 présentant un angle de convergence supérieur par rapport à l'axe O-O, par exemple de l'ordre de 30° ; ce deuxième tronçon 344 peut posséder par exemple une longueur de l'ordre de 20mm, et
- un troisième tronçon d'extrémité 346 présentant un angle de convergence encore supérieur, par exemple de l'ordre de 60° la longueur de ce tronçon 346 est par exemple de l'ordre de 5mm.

Les zones de liaison 343 et 345 définies entre les paires de tronçons adjacents 342/344 et 344/346 sont de préférence formés d'arrondis, par exemple d'un rayon moyen de l'ordre de 5mm, pour éviter tout effet de pointe.

A titre d'exemple non limitatif ; le diamètre moyen de la zone de liaison 345 entre les deux tronçons 344 et 346 est de l'ordre de 34mm.

Comme on l'a indiqué précédemment, chaque traversée T1, T2 est complétée par une gaine en silicone 360 présentant des ailettes.

Plus précisément encore, la gaine 360 en silicone recouvre l'intégralité de l'élément 340 du corps 330 extérieur au boîtier 100 et se prolonge sur le conducteur 300 nettement au delà du corps en résine époxy 330. Ainsi, de préférence la gaine 360 ne s'étend pas à l'intérieur du boîtier 100. Typiquement, la gaine en silicone s'étend à l'extérieur du corps en résine époxy 330 sur le conducteur 300 sur une distance de l'ordre de 270mm.

Les ailettes 362 prévue sur la gaine 360 sont formées de structures annulaires généralement perpendiculaires à l'axe O-O. Ces ailettes peuvent faire l'objet de nombreuses variantes de réalisation. Elles s'inscrivent de préférence dans une enveloppe extérieure de diamètre sensiblement constant pour permettre le passage des tores 334.

Comme on le voit sur la figure 3, de préférence ces ailettes 362 prennent naissance sur la portion de la gaine 360 qui recouvre le corps 330, en possédant une hauteur progressivement croissante en éloignement de la paroi 338. Dans cette portion de gaine 360 les ailettes 362 ont avantageusement un pas de l'ordre de 25mm.

Dans la portion de gaine 260 située au delà du corps 330 en époxy, sur le conducteur central 300, les ailettes 362 ont un diamètre plus important, par exemple de l'ordre de 840mm, et un pas inférieur, par exemple de l'ordre de 12,5mm (avec le cas échéant comme on le voit sur la figure 3, une alternance de deux diamètres d'ailettes 362).

Dans le cadre de la présente invention, l'épaisseur minimale de la gaine silicone 360 sur l'essentiel de son étendue recouvrant le conducteur central 300 est de 3mm, tandis que l'épaisseur minimale de cette gaine silicone 360 sur son étendue recouvrant les tronçons 346, 344, et la portion adjacente du tronçon 342 est au moins de 5mm.

A titre d'exemple non limitatif les ailettes 362 s'étendent au moins sur une longueur de 75mm sur la portion recouvrant directement le conducteur central 300. Il est ainsi prévu à ce niveau par exemple sept ailettes.

Selon une autre caractéristique importante de l'invention, il est prévu une couche d'un matériau assurant une adhésion intime entre les faces respectivement externes du corps en matériau époxy 330 et la surface interne adjacente de la gaine en matériau silicone 360. Cet agent permet à la fois d'assurer l'étanchéité, renforcer le système sur le plan climatique (étanchéité à la pollution et à la pluie) et parfaire la tenue diélectrique.

On notera que la structure de traversée qui vient d'être décrite permet notamment grâce à la géométrie du corps 330 et à sa fixation directe sur la paroi de boîtier 100 d'assurer le support mécanique des contacts fixes 400 participant à la coupure.

Comme on l'a indiqué précédemment, de préférence, le boîtier 100 est muni de moyens d'accrochage du boîtier sur le poteau P, comprenant une console 500 réversible sur le boîtier 100 pour permettre d'accrocher sélectivement le boîtier 100 sur le support P selon deux positions symétriques l'une de l'autre à 180°, selon que le poste source d'alimentation est situé d'un côté ou de l'autre du boîtier.

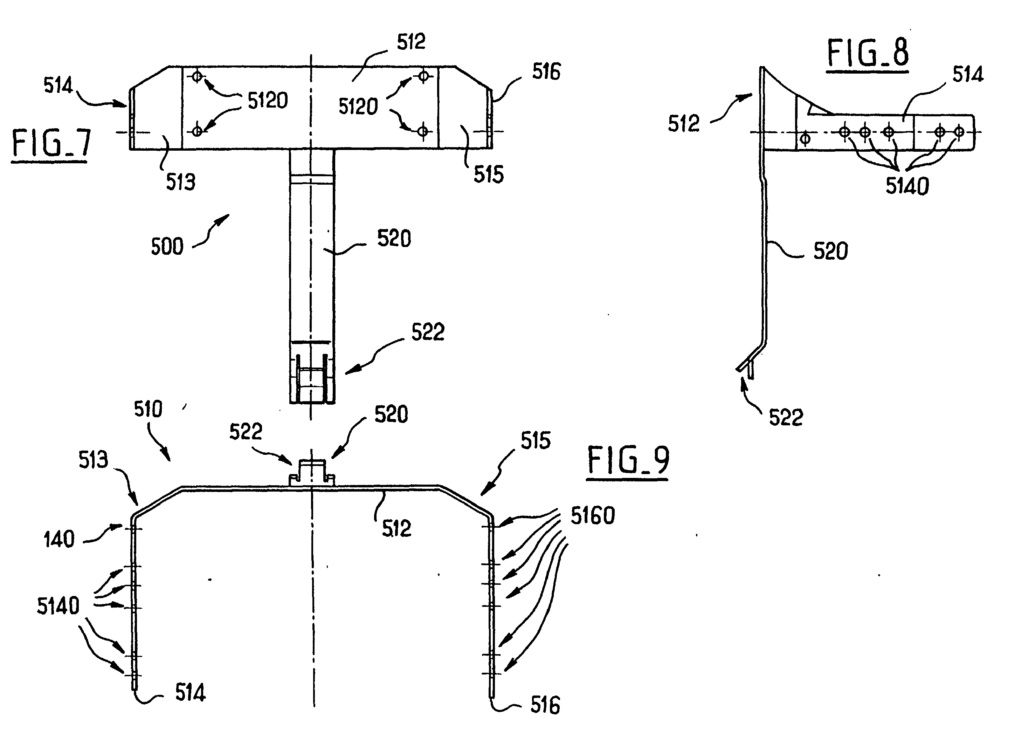

On a illustré sur les figures 7, 8 et 9 annexées, un exemple préférentiel de réalisation d'une telle console 500.

Selon le mode de réalisation illustré sur ces figures, la console 500 comprend en partie supérieure une arche 510 en forme générale de U dont la section droite est complémentaire de celle du boîtier 100. Ainsi, l'arche 510 comprend une âme 512 plane destinée à reposer contre l'une des faces secondaires 114 ou 116 du boîtier 100 et deux branches latérales 514, 516 orthogonales à l'âme 512 et destinées à être accolées contre la surface externe des parois principales 110, 112 du boîtier.

On notera que les branches 514, 516 sont reliées aux extrémités de l'âme 512 par des facettes obliques 513, 515 homologues des parois de liaison 120, 122, 124, 126 du boîtier.

L'âme 512 est munie de perçages 5120 pour assurer la fixation sur l'une des parois secondaires 114, 116. De même, les branches latérales 514, 516 sont munies de perçages 5140, 5160 pour assurer la fixation de la console 500 sur la partie supérieure des parois principales 110, 112 et assurer la fixation de crochets, tels qu'illustrés sous la référence 550 sur la figure 10 destinés à assurer la suspension du boîtier 100 en haut du poteau P. Les branches latérales 514, 516 peuvent également servir à la fixation de moyens support des tronçons de liaison de lignes comme schématisé sous la référence 560 sur la figure 6.

L'homme de l'art comprendra que selon que l'âme 512 de la console 500 est fixée contre la paroi 114 ou la paroi 116, ladite paroi 114 ou ladite paroi 116 est accolée contre le poteau P et ainsi le boîtier 100 peut être fixé sélectivement dans l'une ou l'autre des deux positions autorisées selon que le poste source d'alimentation est situé à droite ou à gauche du boîtier 100. Sur la figure 6, on a ainsi représenté respectivement en traits pleins et en traits interrompus, la position occupée par les crochets 550 selon le positionnement de la console 500 sur le boîtier 100.

La console 500 possède en outre une jambe d'appui 520 formée d'une lame généralement rectiligne qui fait saillie vers le bas à partir du milieu de l'âme 512. De préférence , cette jambe 520 possède des structures 522 pliées vers l'extérieur, c'est-à-dire à l'opposé des branches 514, 516, destinées à reposer contre le poteau P pour assurer un support vertical du boîtier 100.

La console 500 est de préférence réalisée en acier inoxydable.

Bien entendu la présente invention n'est pas limitée aux modes de réalisation particuliers qui viennent d'être décrits mais s'étend à toutes variantes conformes au domaine de protretion de l'invention comme défini par les revendications.

## Revendications

1. Dispositif de coupure électrique pour moyenne et haute tension comprenant un boîtier (100) qui loge des moyens de coupure électrique et est équipé, sur sa paroi supérieure, d'une soupape (600) apte à s'ouvrir automatiquement lorsque la pression à l'intérieur du boîtier (100) dépasse un seuil déterminé, **caractérisé par** un transformateur de tension (200) intercalé entre les moyens de coupure électrique et la soupape (600), de sorte que le transformateur (200) forme un écran interdisant tout risque de projection de pièce provenant des moyens de coupure électrique, vers l'extérieur du boîtier, à travers la soupape (600).

2. Dispositif selon la revendication 1, **caractérisé par le fait que** le transformateur (200) est placé dans une position sensiblement centrale du boîtier (100) considéré dans sa section horizontale.

3. Dispositif selon l'une des revendications 1 ou 2, **caractérisé par le fait que** le boîtier (100) est réalisé en métal.

4. Dispositif selon l'une des revendications 1 à 3, **caractérisé par le fait que** le boîtier (100) possède des angles de paroi tronqués.

5. Dispositif selon l'une des revendications 1 à 4, **caractérisé par le fait que** le boîtier (100) possède une section droite horizontale en octogone.

6. Dispositif selon l'une des revendications 1 à 5, **caractérisé par le fait que** le transformateur (200) est un transformateur abaisseur de tension.

7. Dispositif selon l'une des revendications 1 à 6, **caractérisé par le fait que** le transformateur (200) est un transformateur abaisseur de tension 20 000V / basse tension.

8. Dispositif selon l'une des revendications 1 à 7, **caractérisé par le fait que** le transformateur (200) est utilisé pour piloter un système électronique de gestion de coupure.

9. Dispositif selon l'une des revendications 1 à 8, **caractérisé par le fait que** dans sa partie verticale le boîtier (100) comprend :
. deux parois verticales principales parallèles et opposées (110, 112), recevant chacune en position juxtaposée verticalement les trois moyens de traversée (T1) et respectivement les trois moyens de traversée (T2) associés aux deux tronçons de lignes (Li1 et Li2),
. deux parois verticales secondaires (114, 116), parallèles entre elles et perpendiculaires aux parois principales précitées (110, 112 et
. quatre tronçons de parois verticales (120, 122, 124, 126) assurant respectivement la liaison entre les arêtes verticales adjacentes des parois principales (110, 112) et secondaires (114, 116) précitées.

10. Dispositif selon l'une des revendications 1 à 9, **caractérisé par le fait que** le boîtier (100) est formé d'une structure étanche et loge un gaz neutre ou auto-extincteur d'arc électrique, par exemple du SF6.

11. Dispositif selon l'une des revendications 1 à 10, **caractérisé par le fait que** les conducteurs d'entrée haute tension (210, 212), du transformateur (200) à l'intérieur du boîtier (100), sont situés à une distance minimale de la paroi de boîtier (100) de l'ordre de 61mm.

12. Dispositif selon l'une des revendications 1 à 11 comprenant des moyens (T1, T2) assurant une liaison électrique à travers au moins une paroi (110, 112) du boîtier (100), lesquels moyens de traversée (T1, T2) comprennent un conducteur central (300) entouré d'un élément électriquement isolant (330, 360), **caractérisé par le fait que** l'élément électriquement isolant comprend un corps rigide (330) en matériau synthétique entouré d'une gaine (360) en matériau silicone.

13. Dispositif selon la revendication 12, **caractérisé par le fait que** le corps rigide (330) en matériau synthétique est formé de résine époxy.

14. Dispositif selon l'une des revendications 12 ou 13, **caractérisé par le fait qu'**il comprend un moyen adhésif entre le corps rigide en matériau synthétique (330) et la gaine (360) en matériau silicone.

15. Dispositif selon l'une des revendications 12 à 14, **caractérisé par le fait que** la gaine (360) en matériau silicone est pourvue d'ailettes annulaires (362).

16. Dispositif selon l'une des revendications 1 à 15, **caractérisé par le fait qu'**il comprend des moyens d'accrochage comprenant une console (500) réversible sur le boîtier (100) pour permettre d'accrocher sélectivement le boîtier (100) sur le support (P) selon deux positions symétriques l'une de l'autre à 180°, selon que la source d'alimentation en tension est située d'un côté ou de l'autre du boîtier.

17. Dispositif selon l'une des revendications 1 à 16, **caractérisé par le fait qu'**une gaine thermorétractable électriquement isolante est placée sur les conducteurs haute tension reliés au transformateur (200).

## Claims

1. An electrical interrupter device for medium and high voltages, the device comprising a case (100) containing electrical interrupter means and being fitted on its top wall with a valve (600) suitable for opening automatically when the pressure inside the case (100) exceeds a determined threshold, the device being **characterized by** a voltage transformer (200) interposed between the electrical interrupter means and the valve (600) so that the transformer (200) forms a screen preventing any risk of pieces coming from the electrical interrupter means being projected out from the case through the valve (600).

2. A device according to claim 1, **characterized by** the fact that the transformer (200) is placed in a position that is substantially central when the case (100) is considered in horizontal section.

3. A device according to claim 1 or claim 2, **characterized by** the fact that the case (100) is made of metal.

4. A device according to any one of claims 1 to 3, **characterized by** the fact that the case (100) has truncated wall corners.

5. A device according to any one of claims 1 to 4, **characterized by** the fact that the case (100) has a right horizontal section that is octagonal.

6. A device according to any one of claims 1 to 5, **characterized by** the fact that the transformer (200) is a voltage-dropping transformer.

7. A device according to any one of claims 1 to 6, **characterized by** the fact that the transformer (200) is a voltage-dropping transformer for dropping voltage from 20,000 volts to low voltage.

8. A device according to any one of claims 1 to 7, **characterized by** the fact that the transformer (200) is used for controlling an electronic interruption control system.

9. A device according to any one of claims 1 to 8, **characterized by** the fact that in its vertical portion, the case (100) comprises:
· two main parallel and opposite vertical walls (110, 112) each receiving vertically and in juxtaposed positions the three bushing means (T1 and T2) respectively associated with each of the two line segments (Li1 and Li2);
· two mutually parallel secondary vertical walls (114, 116) perpendicular to the above-mentioned main walls (110, 112); and
· four vertical wall segments (120, 122, 124, 126) providing respective connections between the adjacent vertical edges of the above-mentioned main and secondary walls (110, 112; 114, 116).

10. A device according to any one of claims 1 to 9, **characterized by** the fact that the case (100) is constituted by a leaktight structure and houses an inert gas or an electric arc extinguishing gas, e.g. SF₆.

11. A device according to any one of claims 1 to 10, **characterized by** the fact that the high voltage inlet conductors (210, 212) of the transformer (200) inside the case (100) are situated at a minimum distance from the wall of the case (100) of about 61 mm.

12. A device according to any one of claims 1 to 11, comprising means (T1, T2) providing electrical connections through at least one of the walls (110, 112) of the case (100), each of which bushing means (T1, T2) comprises a central conductor (300) surrounded by an electrically insulating element (330, 360), **characterized by** the fact that the electrical insulating element comprises a rigid body (330) of synthetic material surrounded by a sheath (360) of silicone material.

13. A device according to claim 12, **characterized by** the fact that the rigid body (330) of synthetic material is made of epoxy resin.

14. A device according to claim 12 or claim 13, **characterized by** the fact that it has adhesive means between the rigid body of synthetic material (330) and the sheath (360) of silicone material.

15. A device according to any one of claims 12 to 14, **characterized by** the fact that the sheath (360) of silicone material is provided with annular fins (362).

16. A device according to any one of claims 1 to 15, **characterized by** the fact that it comprises hooking means comprising a bracket (500) that is reversible on the case (100) to enable the case (100) to be hooked on a support (P) selectively in two positions that are symmetrical to each other through 180°, depending on whether the voltage feed source is situated on one side or the other side of the case.

17. A device according to any one of claims 1 to 16, **characterized by** the fact that each of the high voltage conductors connected to the transformer (200) has an electrical insulating heat-shrink sheath placed thereon.

## Patentansprüche

1. schaltvorrichtung für Mittel- oder Hochspannung mit einem Kasten (100), der Mittel zum elektrischen Schalten aufnimmt und an seiner oberen Wand mit einem Ventil (600) ausgestattet ist, das sich automatisch öffnen kann, wenn der Innendruck in dem Kasten (100) einen vorgegebenen Schwellenwert übersteigt, **gekennzeichnet durch**
einen Transformator für eine Spannung (200), der zwischen die Mittel zum elektrischen Schalten und das Ventil (600) geschaltet ist, so dass der Transformator (200) einen Schirm bildet, **durch** den jegliches Risiko beseitigt wird, dass ein Teil der Mittel zum elektrischen Schalten **durch** das Ventil (600) nach außen geschleudert wird.

2. Schaltvorrichtung nach Anspruch 1,
**dadurch gekennzeichnet, dass**
der Transformator (200) in einer Position angeordnet ist, die sich im wesentlichen zentral in dem horizontalen Querschnitt des Kastens (100) befindet.

3. Schaltvorrichtung nach Anspruch 1 oder 2,
**dadurch gekennzeichnet, dass**
der Kasten (100) aus Metall besteht.

4. Schaltvorrichtung nach einem der Ansprüche 1 bis 3,
**dadurch gekennzeichnet, dass**
der Kasten (100) die Seitenwinkel kegelstumpfförmig sind.

5. Schaltvorrichtung nach einem der Ansprüche 1 bis 4,
**dadurch gekennzeichnet, dass**
der Kasten (100) einen geraden achteckigen horizontalen Querschnitt aufweist.

6. Schaltvorrichtung nach einem der Ansprüche 1 bis 5,
**dadurch gekennzeichnet, dass** der Transformator (200) ein Transformator zum Herabsetzen der Spannung ist.

7. Schaltvorrichtung nach einem der Ansprüche 1 bis 6,
**dadurch gekennzeichnet, dass** der Transformator (200) ein Transformator zum Herabsetzen der Spannung von 20.000V auf eine Niederspannung ist.

8. Schaltvorrichtung nach einem der Ansprüche 1 bis 7,
**dadurch gekennzeichnet, dass** der Transformator (200) zum Steuern eines elektronischen Schaltsteuersystems verwendet wird.

9. Schaltvorrichtung nach einem der Ansprüche 1 bis 8,
**dadurch gekennzeichnet, dass** der vertikale Teil des Kastens (100) umfasst:
- zwei vertikale Hauptwände (110, 112), die parallel sind und sich gegenüberstehen und die jede in einer vertikal benachbarten Position die drei Mittel für die Durchführung (T1) bzw. die drei Mittel für die Durchführung (T2) aufnehmen, die den zwei Leitungsabschnitten (Li1 und Li2) zugeordnet sind;
- zwei vertikale Nebenwände (114, 116), die zueinander parallel und senkrecht zu den genannten Hauptwänden (110, 112) stehen;
- vier vertikale Wandabschnitte (120, 122, 124, 126), die jeweils die Verbindung zwischen den vertikalen benachbarten Anschlägen der genannten Hauptwände (110, 112) und Nebenwände (114, 116) sicherstellen.

10. Schaltvorrichtung nach einem der Ansprüche 1 bis 9,
**dadurch gekennzeichnet, dass** der Kasten (100) aus einem dichten Aufbau besteht und ein neutrales oder ein selbstlöschendes Gas für eine Bogenentladung aufnimmt, beispielsweise SF6.

11. Schaltvorrichtung nach einem der Ansprüche 1 bis 10,
**dadurch gekennzeichnet, dass** die Eingangsleiter für hohe Spannung (210, 212) des Transformators (200) in dem Kasten (100) in einem minimalen Abstand von der Wand des Kastens (100) angeordnet sind, der in der Ordnung von 61 mm liegt.

12. Schaltvorrichtung nach einem der Ansprüche 1 bis 11 mit
Mitteln (T1, T2), die eine elektrische Verbindung über wenigstens eine Wand (110, 112) des Kastens (100) sicherstellen, wobei die Durchführungsmittel (T1, T2) einen zentralen Leiter (300) umfassen, der von einem elektrisch isolierenden Element umgeben ist,
**dadurch gekennzeichnet, dass** das elektrisch isolierende Element eine starren Kern (330) aus einem synthetischen Material aufweist, der von einer Hülle (360) aus Silizium-Material umgeben ist.

13. Schaltvorrichtung nach Anspruch 12,
**dadurch gekennzeichnet, dass** der starre Kern (330) aus synthetischein Material aus Epoxy- Harz hergestellt ist.

14. Schaltvorrichtung nach Anspruch 12 oder 13,
**gekennzeichnet durch**
ein Haftmittel zwischen dem starren Kern (330) aus synthetischem Material und der Hülle (360) aus Silizium-Material.

15. Schaltvorrichtung nach einem der Ansprüche 12 bis 14,
**dadurch gekennzeichnet, dass**
die Hülle (360) aus Silizium-Material mit scheibenförmigen Rippen versehen ist.

16. Schaltvorrichtung nach einem der Ansprüche 1 bis 15,
**gekennzeichnet durch** Befestigungsmittel mit einer umkehrbaren Konsole (500) an dem Kasten (100), um das selektive Befestigen des Kastens (100) an dem Träger (F) in zwei um 180° symmetrischen Positionen zu ermöglichen, je nachdem, ob sich die Spannungsversorgung an der einen oder der anderen Seite des Kastens befindet.

17. Schaltvorrichtung nach einem der Ansprüche 1 bis 16,
**dadurch gekennzeichnet, dass**
ein elektrisch isolierender Schrumpfschlauch über den Leitern für hohe Spannung, die mit dem Transformator (200) verbunden sind, angebracht ist.
